(19) Europäisches Patentamt
European Patent Office
Office européen des brevets

(11) Publication number: **0 155 979**
**A1**

(12) # EUROPEAN PATENT APPLICATION

(21) Application number: 84104968.7

(22) Date of filing: 03.05.84

(51) Int. Cl.[4]: C 01 F 7/54

(30) Priority: 22.02.84 US 582637

(43) Date of publication of application: 02.10.85 Bulletin 85/40

(84) Designated Contracting States: DE FR GB IT NL

(72) Inventor: Berry, William W.
1010 Oakridge Manor Drive
Brandon Florida 33511(US)

(72) Inventor: Ashworth, Robert A.
15924 Countrybrook Street
Tampa Florida 33624(US)

(72) Inventor: Rodriguez, Larry A.
7452 18th treet N.E.
St. Petersburg Florida 33702(US)

(71) Applicant: Berry, William W.
1010 Oakridge Manor Drive
Brandon Florida 33511(US)

(84) Designated Contracting States:

(71) Applicant: Ashworth, Robert A.
15924 Countrybrook Street
Tampa Florida 33624(US)

(84) Designated Contracting States:

(71) Applicant: Rodriguez, Larry A.
7452 18th treet N.E.
St. Petersburg Florida 33702(US)

(84) Designated Contracting States:

(74) Representative: Sandmair, Kurt, Dr. Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) **A method for the production of at least one sodium aluminum fluoride salt.**

(57) A novel method is provided for the production of at least one sodium aluminum fluoride salt comprising reacting aluminum chloride in the form of an aqueous solution having a concentration of free acid of less than about 8N, hydrofluoric acid and a sodium salt selected from the group consisting of sodium fluoride and sodium chloride to produce at least one sodium aluminum fluoride salt in the form of a precipitate selected from the group consisting of $Na_3AlF_6$, $Na_5Al_3F_{14}$, $NaAlF_4$ and mixtures thereof, and recovering said at least one sodium aluminum fluoride salt.

EP 0 155 979 A1

Croydon Printing Company Ltd.

# A METHOD FOR THE PRODUCTION OF AT LEAST ONE SODIUM ALUMINUM FLUORIDE SALT

## BACKGROUND OF THE PRESENT INVENTION

The present invention relates to the production of various sodium aluminum fluoride salts from aluminum chloride solutions.

Various U.S. Patents are directed to processes for the recovery of fluoride values in gaseous streams by the formation of cryolite ($Na_3AlF_6$), aluminum fluoride ($AlF_3$), or ammonium aluminum fluoride [$(NH_4)_3AlF_6$] from ammonium fluoride. For example, U.S. Patent No. 2,981,597 discloses a process in which ammonium fluoride is reacted with aluminum sulfate [$Al_2(SO_4)_3$]. U.S. Patent No. 2,916,352 discloses a process wherein ammonium fluoride is reacted with aluminum fluoride to produce ammonium aluminum fluoride, which in turn is converted to cryolite. All of the processes which form useful aluminum-containing fluorine compounds require a relatively pure source of aluminum for the process (soluble aluminum salts, aluminum oxide, aluminum hydrate). The high cost of these aluminum sources often dictate against use of the known processes for recovery of fluorine values from the gaseous effluent streams.

U.S. Patent No. 3,833,713 discloses a process for the preparation of ammonium aluminum fluoride and cryolite from an inexpensive aluminum source (clay) by reacting silicon tetrafluoride ($SiF_4$) gas with aqueous ammonium fluoride ($NH_4F$) to form an ammonium silicofluoride [$(NH_4)_2SiF_6$] intermediate. The intermediate is then contacted with clay to form a soluble ammonium silicofluoride, a relatively insoluble ammonium aluminum fluoride (which precipitates), water, and ammonia. The ammonium aluminum fluoride is then slurried with sodium hydroxide to form cryolite, ammonia and water. While this method of preparation utilizes an

inexpensive aluminum source, and may recycle ammonia, the sodium hydroxide reagent required to form cryolite is relatively expensive.

U.S. Patent No. 3,656,894 provides a method for the production of cryolite by the ammoniation of sodium silicofluoride, and reaction with sodium aluminate. Again, the economics of this method can be greatly influenced by the cost of the reagents employed.

Other U.S. Patents are also directed to processes for the production of sodium aluminum fluoride salts. U.S. Patent No. 1,914,768 discloses the production of cryolite by the reaction of an aluminum salt such as aluminum chloride or aluminum nitrate with sodium fluoride. The aluminum salt may be produced from an aluminous raw material by treatment thereof with a strong mineral acid. U.S. Patent No. 3,175,882 discloses a process for the production of cryolite wherein aluminum fluoride is reacted with either sodium chloride or sodium sulfate. U.S. Patent No. 3,875,291 discloses a process for the production of cryolite by the reaction of aluminum fluoride, ammonium fluoride and a sodium salt such as sodium chloride or sodium sulfate. U.S. Patent No. 3,987,543 is directed to a process for the production of cryolite by the reaction of hydrofluoric acid, aluminum fluoride and a sodium salt such as sodium chloride or sodium sulfate. U.S. Patent No. 4,362,703 discloses a process for the production of cryolite from fly ash whereby the fly ash is contacted with phosphoric acid to form aluminum phosphate which is converted to sodium aluminate by reaction with sodium hydroxide. The sodium aluminate is then reacted with hydrofluoric acid to form cryolite.

It would, however, be desirable to provide a process for the production of sodium aluminum fluoride salts which employs relatively inexpensive reagents and which process is relatively simple.

## OBJECT AND SUMMARY OF THE INVENTION

It is accordingly an object of the present invention to provide a method for the production of sodium aluminum fluoride salts by use of low grade aluminum sources.

It is also an object of the present invention to provide a method for the production of sodium aluminum fluoride salts wherein the use of expensive reagents can be minimized.

It is also an object of the present invention to provide a method for the production of sodium aluminum fluoride salts wherein the salts are readily recovered in the form of a precipitate.

It is still further an object of the present invention to provide a method for the production of sodium aluminum fluoride salts wherein by-product hydrochloric acid may be employed in the production of reagents used to form the salts.

In accordance with the present invention, there is thus provided a method for the production of at least one sodium aluminum fluoride salt comprising reacting aluminum chloride in the form of an aqueous solution having a concentration of free acid of less than about 8N, hydrofluoric acid and a sodium salt such as sodium fluoride or sodium chloride to produce at least one sodium aluminum fluoride salt in the form of a precipitate selected from the group consisting of $Na_3AlF_6$, $Na_5Al_3F_{14}$, $NaAlF_4$ and mixtures thereof, and recovering said at least one sodium aluminum fluoride salt.

In accordance with the present invention there is also provided a method for the production of at least one sodium aluminum fluoride salt comprising the steps of:

(1) providing an aqueous aluminum chloride solution having a free acid concentration of less than about 8N;

(2) producing sodium fluoride and hydrogen chloride by reacting hydrogen fluoride and sodium chloride;

(3) contacting said aluminum chloride solution with hydrogen fluoride to yield hydrogen chloride and an admixture of aluminum chloride, aluminum fluoride and hydrogen fluoride;

(4) reacting said admixture from step (3) with sodium fluoride from step (2) at a temperature ranging from about 30 to about 110°C. to produce at least one sodium aluminum fluoride salt selected from the group consisting of $Na_3AlF_6$, $Na_5Al_3F_{14}$ and $NaAlF_4$ and

(5) recovering said at least one sodium aluminum fluoride salt.

## BRIEF DESCRIPTION OF THE DRAWING

The Figure is a schematic representation of the method of the present invention.

## DETAILED DESCRIPTION OF THE INVENTION

The process of the present invention can be practiced as described below in conjunction with the Figure.

Aluminum chloride in the form of an aqueous solution 2 is contacted with hydrofluoric acid 4 in scrubber 6 at a temperature ranging from about 30 to about 110°C. to produce an admixture 8 of aluminum chloride, aluminum fluoride and hydrofluoric acid. Admixture 8 is then fed to reactor 10 together with sodium fluoride 12 wherein at least one sodium aluminum fluoride salt is produced at a reaction temperature of from about 50 to about 100°C. The product salts can then be thickened at 14, filtered at 16 together with a water wash 18, and dried in dryer 20 with the solid product salts 22 being recovered.

One specific advantage of the present invention is that the aluminum chloride solution which is employed as a reagent can be produced from a low grade aluminum source such as fly ash by the acid leaching of the low grade source with hydrochloric acid (not shown).

The term fly ash is intended to refer to the ash produced by carbonaceous fuel-fired power station or industrial boilers and gasification processes as well as the ash recovered by means such as electrostatic precipitation from flue gases or stacks associated with such sources. Typically, fly ash comprises major portions of silicon dioxide (e.g., about 40 to 50 weight percent) and aluminum (e.g., about 25 to 30 weight percent) together with minor amounts of oxides of iron, manganese, calcium, magnesium, titanium and/or potassium, etc.

The fly ash may be leached with concentrated hydrochloric acid to yield aluminum chloride hexahydrate ($AlCl_3 \cdot 6H_2O$), with the concentration of the acid in the leaching medium being less than about 8N, preferably ranging from about 2 to about 8N, most preferably from about 4 to about 6N, with temperatures in the leaching zone ranging from about 60 to about 100°C. Sufficient ash is generally provided in the leaching zone to ensure a solids content of from about 15 to 35 by weight.

It should be noted that the concentration of free acid in the aluminum chloride solution should be reduced to less than

about 8N, and preferably less than about 6N, prior to contacting the aluminum chloride solution with the hydrofluoric acid in scrubber 6. The use of an aluminum chloride solution having such an acid concentration enables the sodium aluminum fluoride product salts to be readily and advantageously recovered in the form of a precipitate.

The sodium fluoride 12 which is fed to reactor 10 may be added in the form of an aqueous slurry which has been formed by the reaction of hydrogen fluoride 4 with sodium chloride 24 in scrubber 26 wherein the scrubbing medium is the sodium chloride, the reaction proceeding as follows:

$$NaCl + HF \longrightarrow NaF\downarrow + HCl \qquad (1)$$

The above reaction (1) as well as the following reactions (3), (3a), (4), (5) and (6) may be carried out at a temperature ranging from about 60 to about 110°C, at ambient pressure or less, and otherwise under stoichiometric conditions. The slurry of sodium fluoride and hydrochloric acid 28 which is produced in reaction (1) may be thickened at 30 and filtered at 32, with the sodium fluoride 12 being fed to reactor 10 as previously discussed. The underflow from the filter 32 can then be recycled to the scrubber 26 or recovered and utilized as a chemical reagent.

The reaction which occurs in each of scrubber 6 and scrubber 26 results in the evolution of hydrogen chloride gas 27 which can advantageously be employed in the production of aluminum chloride by the leaching of low grade aluminum sources with hydrochloric acid as discussed previously. The present invention thus results in the efficient use of various byproducts.

The hydrogen fluoride 4 which is employed as a reactant in both scrubber 6 and scrubber 26 may be produced by the reaction of sulfuric acid 34 and calcium fluoride 36 in the presence of steam 38 under conventional conditions in reactor 40. By-product gypsum 42 can be recovered from the product stream 44 via filtration in filter 46 in the presence of wash water stream 48, with the filtrate stream 50 being recycled to reactor 40. The hydrogen fluoride may be produced in a manner consistent with reaction (2) below:

$$CaF_2 + H_2SO_4 + 2H_2O \longrightarrow 2HF\uparrow + CaSO_4 \cdot 2H_2O \qquad (2)$$

Various sodium aluminum fluoride salts (including admixtures thereof) can be produced in reactor 10 depending upon the stoichiometric conditions employed. Specifically, cryolite ($Na_3AlF_6$) may be formed in accordance with reaction (3):

$$AlCl_3 \cdot 6H_2O + 3NaF + 3HF \longrightarrow Na_3AlF_6\downarrow + 3HCl + 6H_2O \qquad (3)$$

The production of cryolite as noted above necessitates the use of a high ratio of sodium fluoride to aluminum chloride, with the molar ratio ranging from about 2.7 to about 3.5 to 1.

It is also possible to use an excess of NaF to produce cryolite without using HF in accordance with the reaction 3(a):

$$AlCl_3 \cdot 6H_2O + 6NaF \longrightarrow Na_3AlF_6\downarrow + 3NaCl + 6H_2O) \qquad (3a)$$

Chiolite ($Na_5Al_3F_{14}$) may be formed in accordance with reaction (4) as follows:

$$3AlCl_3 + 5NaF + 9HF \longrightarrow Na_5Al_3F_{14}\downarrow + 9HCl \qquad (4)$$

In contrast to the amount of sodium fluoride employed in reaction (3), the ratio of sodium fluoride to aluminum chloride is reduced, with the molar ratio ranging from about 1.5 to about 2.0 to 1. Furthermore, the amount of free hydrofluoric acid which is employed, relative to the amount of sodium fluoride, is increased.

The sodium aluminum fluoride salt $NaAlF_4$ can similarly be produced as noted in reaction (5) below:

$$AlCl_3 + NaF + 3HF \longrightarrow NaAlF_4\downarrow + 3HCl \qquad (5)$$

The amount of sodium fluoride employed in reaction (5) is also maintained within a molar ratio of sodium fluoride to aluminum chloride of about 0.8 to about 1.2 to 1.

It is also possible to modify the above reactions (3)-(5) by substituting equimolar quantities of sodium chloride for sodium fluoride in each instance. For example, sodium chloride may be used in reactor 10 (e.g., in the form of a slurry or saturated solution). However, in such a circumstance, the amount of hydrogen fluoride which is employed will need to be increased to allow for the decreased addition of fluoride as the sodium salt. The modification of reaction (4) would thus occur as noted in reaction (6) below:

$$3AlCl_3 + 5NaCl + 14HF \longrightarrow Na_5Al_3F_{14}\downarrow + 14HCl \qquad (6)$$

Of course, as a result of the increased presence of chlorine in reaction (6), increased amounts of hydrochloric acid are produced. Reactions (3) and (5) may be modified in a similar manner which would be apparent to those skilled in the art.

The invention is additionally illustrated in connection with the following Example which is to be considered as illustrative of the present invention. It should be understood, however, that the invention is not limited to the specific details of the Example.

EXAMPLE

A solution of HF was added to a solution of aluminum chloride that contained 10 grams/liter of $Al^{+3}$. The amount of HF added was equal to the stoichiometric amount required to produce chiolite ($Na_5Al_3F_{14}$). To this mixture, an excess of NaCl slightly above stoichiometric was added; a precipitate formed immediately. The reaction was carried out at 30 to 35°C. After 4 hours residence time, over 95 percent of the $Al^{+3}$ had precipitated as a salt. After 24 hours, only a slight additional amount had precipitated. X-ray analysis of the precipitated salt indicated the material to be essentially chiolite with admixed sodium tetrafluoride. The material contained Na/Al/F in a weight ratio of 1.5/1/4, compared to a pure chiolite ratio of 1.4/1/3.3.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the spirit of the invention.

WE CLAIM:

1. A method for the production of at least one sodium aluminum fluoride salt comprising reacting aluminum chloride in the form of an aqueous solution having a concentration of free acid of less than about 8N, hydrofluoric acid and a sodium salt selected from the group consisting of sodium fluoride and sodium chloride to produce at least one sodium aluminum fluoride salt in the form of a precipitate selected from the group consisting of $Na_3AlF_6$, $Na_5Al_3F_{14}$, $NaAlF_4$ and mixtures thereof, and recovering said at least one sodium aluminum fluoride salt.

2. The method of claim 1 wherein said reaction occurs at a temperature ranging from about 30 to about 110°C.

3. The method claim 1 wherein said at least one salt is dried upon recovery.

4. The method of claim 1 wherein said salt comprises $Na_3AlF_6$ and the molar ratio of said sodium salt to said aluminum chloride ranges from about 2.7 to about 3.5 to 1.

5. The method of claim 1 wherein said salt comprises $Na_5Al_3F_{14}$ and the molar ratio of said sodium salt to said aluminum chloride ranges from about 1.5 to about 2.0 to 1.

6. The method of claim 1 wherein said salt comprises $NaAlF_4$ and the molar ratio of said sodium salt to said aluminum chloride ranges from about 0.8 to about 1.2 to 1.

7. The method of claim 1 wherein said sodium salt is sodium fluoride.

8. The method of claim 1 wherein said sodium salt is sodium chloride.

9. The method of claim 1 wherein the concentration of free acid in said aluminum chloride solution ranges from about 2 to about 8N.

10. The method of claim 1 wherein the concentration of free acid in said aluminum chloride solution ranges from about 4 to about 6N.

11. The method of claim 1 wherein said aluminum chloride solution is produced by the acid leaching of a source of aluminum.

12. The method of claim 11 wherein said source of aluminum comprises fly ash.

13. The method of claim 1 wherein said sodium fluoride is produced together with hydrogen chloride by the reaction of sodium chloride and hydrogen fluoride.

14. The method of claim 13 wherein said hydrogen chloride is employed in the acid leaching of a source of aluminum to form said aluminum chloride solution.

15. The method of claim 1 wherein said hydrogen fluoride is formed by the reaction of calcium fluoride and sulfuric acid.

16. A method for the production of at least one sodium aluminum fluoride salt comprising the steps of:

(1) providing an aqueous aluminum chloride solution having a free acid concentration of less than about 8N;

(2) producing sodium fluoride and hydrogen chloride by reacting hydrogen fluoride and sodium chloride;

(3) contacting said aluminum chloride solution with hydrogen fluoride to yield hydrogen chloride and an admixture of aluminum chloride, aluminum fluoride and hydrogen fluoride;

(4) reacting said admixture from step (3) with sodium fluoride from step (2) at a temperature ranging from about 30 to about 110°C. to produce at least one sodium aluminum fluoride salt selected from the group consisting of $Na_3AlF_6$, $Na_5Al_3F_{14}$ and $NaAlF_4$ and

(5) recovering said at least one sodium aluminum fluoride salt.

17. The method of claim 16 wherein said at least one salt is dried during recovery.

18. The method of claim 16 wherein said salt comprises $Na_3AlF_6$ and the molar ratio of said sodium fluoride to said aluminum chloride ranges from about 2.7 to about 3.5 to 1.

19. The method of claim 16 wherein said salt comprises $Na_5Al_3F_{14}$ and the molar ratio of said sodium fluoride salt to said aluminum chloride ranges from about 1.5 to about 2.0 to 1.

20. The method of claim 16 wherein said salt comprises $NaAlF_4$ and the molar ratio of said sodium fluoride to said aluminum chloride ranges from about 0.8 to about 1.2 to 1.

21. The method of claim 16 wherein the concentration of free acid in said aluminum chloride solution ranges from about 2 to about 8N.

22. The method of claim 16 wherein the concentration of free acid in said aluminum chloride solution ranges from about 4 to 6N.

23. The method of claim 16 wherein said aluminum chloride solution of step (1) is provided by leaching a source of aluminum with hydrochloric acid.

24. The method of claim 23 wherein said hydrochloric acid employed to leach said source of aluminum is derived from at least one of steps (2) and (3).

25. The method of claim 23 wherein said source of aluminum comprises fly ash.

1/1

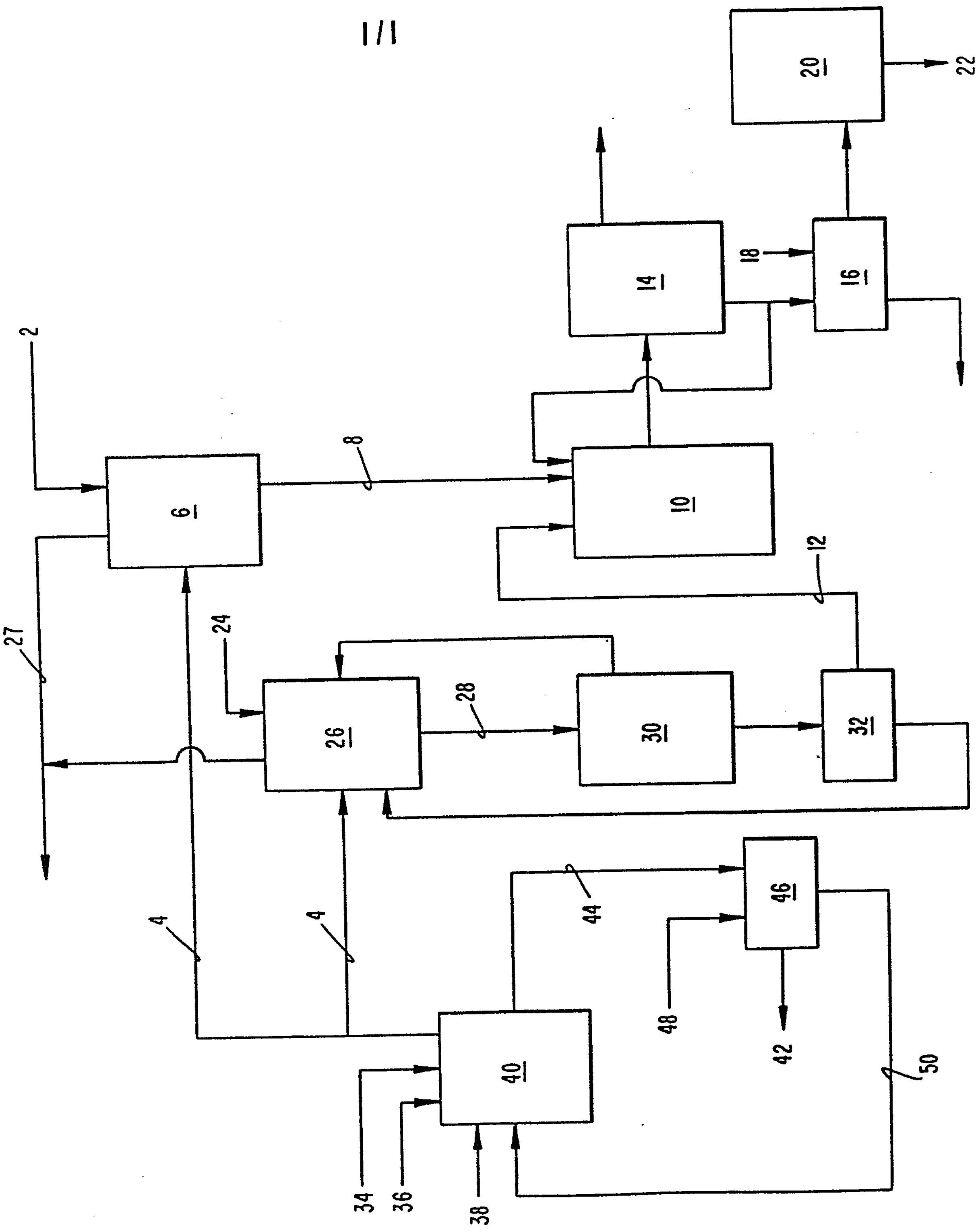

0155979

European Patent Office

# EUROPEAN SEARCH REPORT

Application number

EP 84 10 4968

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 717 714 (SALINE LUDWIGSHALLE)<br>* Page 3; page 2, example 2 and lines 36-39 *<br>--- | 1,4,7, 8,11, 13,14, 15,16, 18,23, 24 | C 01 F 7/54 |
| X | FR-A-1 510 806 (SOCIETA EDISON)<br>* Page 3, claim I, 1-2; page 2, example 1 *<br>--- | 1,2,4, 5,6,7, 8,11, 13,14 | |
| X | GB-A- 203 708 (CHEMISCHE FABRIK GRIESHEIM-ELEKTRON)<br>* Page 3, lines 67-124 and page 2, example I *<br>--- | 1-25 | TECHNICAL FIELDS SEARCHED (Int. Cl.4) |
| D,A | US-A-4 362 703 (IOWA STATE UNIVERSITY RESEARCH FOUNDATION)<br>* Page 1; abstract *<br>----- | 12 | C 01 F 7/54<br>C 01 F 7/22<br>C 01 F 7/56 |

The present search report has been drawn up for all claims

| Place of search | Date of completion of the search | Examiner |
|---|---|---|
| THE HAGUE | 03-06-1985 | LIBBERECHT-VERBEECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82